(19) Europäisches Patentamt
European Patent Office
Office européen des brevets

(11) **EP 4 435 473 A1**

(12) **EUROPEAN PATENT APPLICATION**

(43) Date of publication:
**25.09.2024 Bulletin 2024/39**

(21) Application number: **24158870.6**

(22) Date of filing: **21.02.2024**

(51) International Patent Classification (IPC):
**G01S 17/36** (2006.01)    **G01S 7/4914** (2020.01)
**G01S 7/493** (2006.01)    **G01S 17/894** (2020.01)

(52) Cooperative Patent Classification (CPC):
**G01S 17/894; G01S 7/4914; G01S 7/4915;
G01S 7/493; G01S 17/36**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.03.2023 US 202318186767**

(71) Applicant: **Analog Devices International Unlimited
Company
Limerick (IE)**

(72) Inventors:
- **CALPE, Javier**
  **Co. Limerick (IE)**
- **HURWITZ, Jonathan Ephraim David**
  **Co. Limerick (IE)**
- **LE DORTZ, Nicolas**
  **Wilmington, 01887 (US)**

(74) Representative: **Yang, Shu
Withers & Rogers LLP
2 London Bridge
London SE1 9RA (GB)**

(54) **A CONTINUOUS WAVE TIME OF FLIGHT SYSTEM**

(57) There is provided a continuous wave time of flight, CW-ToF, camera system comprising: a laser for emitting laser light; an imaging sensor, the image sensor comprising a pixel array for accumulating charge based on incident light comprising reflected laser light off an object, the pixel array comprising a plurality of rows of pixels; and a control system coupled to the imaging sensor and configured to control the pixel array to: identify at least a first row and a second row of the plurality of rows, wherein the first row and the second row are adjacent one another in the pixel array; accumulate charge in the pixels of the first row using a first integration setting for a first time period; accumulate charge in the pixels of the second row using a second integration setting for the first time period; and read out a set of charge samples, wherein the first row contains a first charge from accumulating using the first integration setting and the second row contains a second charge from accumulating using the second integration setting, and wherein the second integration setting is phase delayed relative to the first integration setting.

FIG. 7

EP 4 435 473 A1

**Description**

FIELD

This application relates to a continuous wave time of flight system and, in particular but not exclusively, to a continuous wave time of flight system that uses multiple phases in a single snapshot for determining distance to a moving object.

BACKGROUND

Time-of-flight (ToF) camera systems are range imaging systems that resolve the distance between the camera and an object by measuring the round trip of light emitted from the ToF camera system. The systems typically comprise a light source (such as a laser or LED), a light source driver to control the emission of light from the light source, an image sensor to image light reflected by the subject, an image sensor driver to control the operation of the image sensor, optics to shape the light emitted from the light source and to focus light reflected by the object onto the image sensor, and a computation unit configured to determine the distance to the object based on the emitted light and the corresponding light reflection from the object.

In a Continuous Wave (CW) ToF camera system, multiple periods of a continuous light wave are emitted from the laser. The system is then configured to determine the distance to the imaged object based on a phase difference between the emitted light and the received reflected light. CW-ToF systems often modulate the emitted laser light with a first modulation signal and determine a first phase difference between the emitted light and reflected light, before modulating the emitted laser light with a second modulation signal and determine a further phase difference between the emitted light and reflected light. In general, two or three modulation frequencies are used. A depth map/depth frame can then be determined based on the phase differences for these multiple modulation frequencies. The various modulation signals have different frequencies so that the various phase differences can be used to resolve phase wrapping.

During the time that it takes to emit the laser light and collect/integrate/read-off the charge stored on the image sensor between each light emission, it is possible that the object being imaged will have moved, which may cause inaccuracies and/or blurring in the generated image frame. Furthermore, when the information obtained from multiple modulation frequencies are combined in order to obtain a single depth map, the time taken for this process, i.e. the exposure plus readout time plus, in particular, the readout time, may cause more inaccuracies and/or blurring in the generated image frame in the event that the object has moved. Therefore, a faster CW-ToF camera system that can reduce inaccuracies and/or blurring in the generated image information is desirable.

SUMMARY OF THE DISCLOSURE

An imaging sensor is a sensor that detects and conveys image information by converting light into electrical signals. In a typical imaging sensor, there is a 2D array of pixels, and each pixel includes a photodetector and an active amplifier. Light impacting upon each pixel causes electrical charges to accumulate on the pixels and an accumulated charge is read and transferred to signal processing circuitry. The accumulated charge may then be amplified by individual amplifiers at each pixel before being output as a voltage signal.

In the context of CW-ToF camera systems, a clock generation circuit in the imaging sensor typically output timing signals for driving a laser, controlling the integration times, and for reading out charge values accumulated on the pixels. Together with a converter, memory and controller, the clock generation circuit may determine depth frames by controlling laser emission, controlling the image sensor charge accumulation timing, reading out the image sensor and processing the resultant data.

The present disclosure relates to an imaging sensor for a CW-ToF camera system that, within a single image frame, involves multiple phases for the different rows of pixels. This way, different rows in the pixel array may be phase delayed with respect to one another but accumulation happens over the same time period, and so more than one piece of information can be deduced from a single read out than the case whereby no phase delays are introduced between adjacent rows of the pixel array. Thus, the CW-ToF camera system can produce depth images with reduced inaccuracies and/or blurring in the generated image information, in particular when the scene is not static, since integration time may be reduced. The way in which the present disclosure achieves this effect is by sacrificing spatial resolution for speed. In other words, by using phase delays within a single image frame but accumulating different rows with different phase delays over the same time period, the overall integration time of the rows is reduced for obtaining the same information as would be obtained if accumulation for each of the rows occurs sequentially.

In a first aspect, there is provided continuous wave time of flight, CW-ToF, camera system comprising: a laser for emitting laser light; an imaging sensor, the image sensor comprising a pixel array for accumulating charge based on incident light comprising reflected laser light off an object, the pixel array comprising a plurality of rows of pixels; and a control system coupled to the imaging sensor and configured to control the pixel array to: identify at least a first row and a second row of the plurality of rows, wherein the first row and the second row are adjacent one another in the pixel array; accumulate charge in the pixels of the first row using a first integration setting for a first time period; accumulate charge in the pixels of the second row using a second integration setting for the first time period; and read out a set of charge samples, wherein the first row contains a first charge from accumulating using the first integration setting and the second row contains a second charge from accumulating using the second integration setting, and wherein the second integration setting is phase delayed relative to the first integration setting.

In a second aspect, there is provided a method of reading out a pixel array of an imaging sensor of a continuous wave time of flight, CW-ToF, camera system, the pixel array comprising a plurality of rows of pixels, the method comprising: identifying at least a first row and a second row of the plurality of rows, wherein the first row and the second row are adjacent one another in the pixel array; accumulating charge in the pixels of the first row using a first integration setting for a first time period; accumulating charge in the pixels of the second row using a second integration setting for the first time period; and reading out a set of charge samples, wherein the first row contains a first charge from accumulating using the first integration setting and the second row contains a second charge from accumulating using the second integration setting, and wherein the second integration setting is phase delayed relative to the first integration setting.

In a third aspect, there is provided a method of reading out pixel array of an imaging sensor of a continuous wave time of flight, CW-ToF, camera system, the pixel array comprising a plurality of rows of pixels, the method comprising: identifying at least a first row and a second row of the plurality of rows, wherein the first row and the second row are adjacent one another in the pixel array; accumulating charge in the pixels of the first row using a first integration setting for a first time period; accumulating charge in the pixels of the second row using a second integration setting for the first time period, wherein the second integration setting is phase delayed relative to the first integration setting; and reading out a combined depth value of a macropixel, wherein a macropixel comprises at least a pixel in the first row and an adjacent pixel in the second row.

Definitions

An imaging sensor comprises a plurality of pixels in rows and columns that accumulate charge based on incident light over an accumulation period. Rows and columns of the imaging sensor are addressable and typically the imaging sensor may have an output amplifier and ADC per column, with pixel charges being read out row-by-row by sampling voltages that are proportional to light intensity. A 'row' may be defined as a plurality of pixels that are read out as a line and images are formed by scanning pixel lines to read out rows. Once a row has been read out, the pixels may be reset or in other words the accumulated charges may be cleared for the next image frame. It is to be understood that the term 'row' has no implication on the physical orientation of the pixels, i.e. it has no implication on whether the line is oriented horizontally or vertically.

The imaging sensor could be a CMOS imaging sensor. Alternatively, the imaging sensor could be another type of active pixel imaging sensor.

'Progressive scanning' involves scanning a first pixel line, then a second pixel line then a third pixel line etc. This continues until the entire image frame has been scanned. In the context of the present disclosure, interleaved scanning is performed. Consecutive rows of the imaging sensor may be categorised as 'odd rows' and 'even rows', or 'odd-numbered lines' and 'even-numbered lines'.

A 'single-ended' pixel is one whereby the pixel is not divided into different areas and one signal is read out from each pixel. Thus, the entire pixel accumulates charge over a time period and then that charge is read out as a voltage.

A 'differential pixel' is one whereby the pixel is divided into different areas and a differential signal is readout from each imaging pixel. For example, the differential pixel could be split into two different areas operated in anti-phase such that when one area is accumulating charge, the other area is not, and vice versa. The accumulated charges may be readout as differential voltages, amplified by the differential amplifiers and digitally converted by the ADCs before onward processing by the memory, processor and controller. In the context of the present disclosure, the two different areas are driven by a common clock.

A 'macropixel' may be defined to comprise at least a pixel in the first row and an adjacent pixel in the second row. During read out, a control system of the CW-TOF system may be configured to take readings from the macropixels and combining information from charge accumulations from different rows of pixels, whereby phase delays exist between different rows of pixels, such that a macropixel contains information from charge accumulations with different initial phases and we can estimate depth information. Further, combined information about the integrated charge from a plurality of macropixels may also be collated, the macropixels being shifted by one row at a time thus improving the spatial resolution in the estimation of the depth. In other words, a first macropixel that is read out centred around pixel 'x' may be shifted down by a row such that pixel 'x' is now shifted up by a row and is one row higher in a second macropixel that is read out. Thus, when the first and second macropixels are read out, two sets of information about depth value for pixel 'x' is obtained.

An 'integration setting' may be defined as an integration period or a phase of the emitted light over which integration occurs. For example, the integration setting may be the first part/interval of the period/cycle of the first laser light (0° to 180°, or 0 to $\pi$), in which case the imaging sensor may be controlled to "open its shutter" for charge accumulation at the times when the phase of the emitted first laser light is between 0° to 180°.

FIGURES

Aspects of the present disclosure are described, by way of example only, with reference to the following drawings, in which:

Figure 1 is a schematic representation of a CW-ToF imaging system in accordance with an aspect of the present disclosure;
Figure 2 is a schematic representation of how the CW-ToF imaging system of Figure 1 may be operated to accumulate and readout charge from the imaging sensor;
Figure 3 shows example details of a simplified single ended pixel model for a CMOS image sensor;
Figure 4 shows example details of a simplified differential pixel model for a CMOS image sensor;
Figure 5 is a schematic representation of a plurality of pixels of an imaging sensor of a CW-ToF imaging system;
Figure 6 is a schematic representation of a plurality of pixels of an imaging sensor of a CW-ToF imaging system in accordance with a further aspect of the present disclosure;
Figure 7 shows the multiple relative initial phase of the integration times in accordance with a further aspect of the present disclosure;
Figure 8 represents example method steps according to an aspect of the present disclosure; and
Figure 9 represents example method steps according to an aspect of the present disclosure.

DETAILED DESCRIPTION

As described in the background section, CW-ToF camera systems are configured to modulate emitted laser light with a modulation signal and determine a first phase difference between the emitted light and reflected light. Phase unwrapping can then be performed using the determined phase difference and a depth map/depth frame can be determined. The present inventors have realised that inaccuracies and/or blurring in the generated image frame, in particular when objects are moving, may be reduced by reducing the number of read out instances. Instead, the present inventors have recognised that by using phase delays between rows in the pixel array but accumulating over the same time period, more than one piece of information can be deduced from a single read out, and thus the CW-ToF camera system can produce depth images with reduced inaccuracies and/or blurring in the generated image information, in particular when the scene is not static, since integration time may be reduced. The way in which the present disclosure achieves this effect is by sacrificing spatial resolution for speed. In other words, by using multiple phases delays within a single image frame and accumulating different rows with different phase delays over a single time period, the overall integration time of the rows is reduced for obtaining the same information as would be obtained if accumulation for each of the rows occurs sequentially.

The present disclosure may be particularly relevant in several applications. For example, one application could be to generate depth information. In particular, for moving objects, such as in conveyor belt applications, the present disclosure proposes techniques to allow reduced read out times for obtaining an image frame. different rows in the pixel array are phase delayed with respect to one another but accumulation happens over the same time period, and so more than one piece of information can be deduced from a single read out than the case whereby no phase delays are introduced between adjacent rows of the pixel array. Thus, the CW-ToF camera system can produce depth images with reduced inaccuracies and/or blurring in the generated image information, in particular when the scene is not static, since integration time may be reduced. The way in which the present disclosure achieves this effect is by sacrificing spatial resolution for speed. In other words, by using phases delays within a single image frame but accumulating different rows with different phase delays over the same time period, the overall integration time of the rows is reduced for obtaining the same information as would be obtained if accumulation for each of the rows occurs sequentially.

In one example, at least a first row and a second row of the plurality of rows are identified. The first row and the second row are adjacent one another in the pixel array. Charge in the pixels of the first row are accumulated using a first integrations setting for a first time period. Charge in the pixels of the second row are accumulated using a second integration setting for the first time period. The first and second integration settings may have a first phase delay with respect to the emitted laser light and a second phase delay with respect to the emitted laser light, respectively. Finally, a set of charge samples are read out, wherein the first row contains a first charge from accumulating using the first integration setting and the second row contains a second charge from accumulating using the second integration setting, and wherein the second integration setting is phase delayed relative to the first integration setting. This way, accumulated charge of one row is combined with accumulated charge of an adjacent row in order to obtain a single depth. It will be appreciated that this principle may apply to combining accumulated charge of one row with more than one other rows that are adjacent one another. For example, accumulated charge from three adjacent rows may be combined in order to obtain a single depth value. The control system may be configured to control the pixel array to combine the first charge and the second charge in order to determine a combined depth value such that the combined depth value contains information of a plurality of initial phases of the emitted laser light.

In another example, at least a first row and a second row of the plurality of rows are identified. The first row and the second row are adjacent one another in the pixel array. Charge in the pixels of the first row are accumulated using a first integrations setting for a first time period. Charge in the pixels of the second row are accumulated using a second integration setting for the first time period, wherein the second integration setting is phase delayed relative to the first integration setting. The first and second integration settings may be a first phase of the emitted laser light and a second phase of the emitted laser light, respectively. Finally, a combined depth value of a macropixel is read out, wherein a macropixel comprises at least a pixel in the first row and an adjacent pixel in the second row. A macropixel may comprise at least a pixel in the first row and an adjacent pixel in the second row, and wherein the control system is configured to read out combined depth values from a plurality of macropixels, the macropixels being shifted by one row at a time. Therefore, in addition to the combined depth value contains information of a plurality of initial phases of the emitted laser light of the example above, this example further contains more than one piece of information about an individual pixel in a macropixel by overlapping the macropixels being read out. In other words, a macropixel contains pixels from more than one row, but read out of macropixels is shifted by only one row at a time, and so information of an individual pixel of the macropixel is obtained during more than one read out.

These examples are particularly advantageous for imaging moving objects since reduced read out time leads to reduced blurring and depth inaccuracies in the image frame.

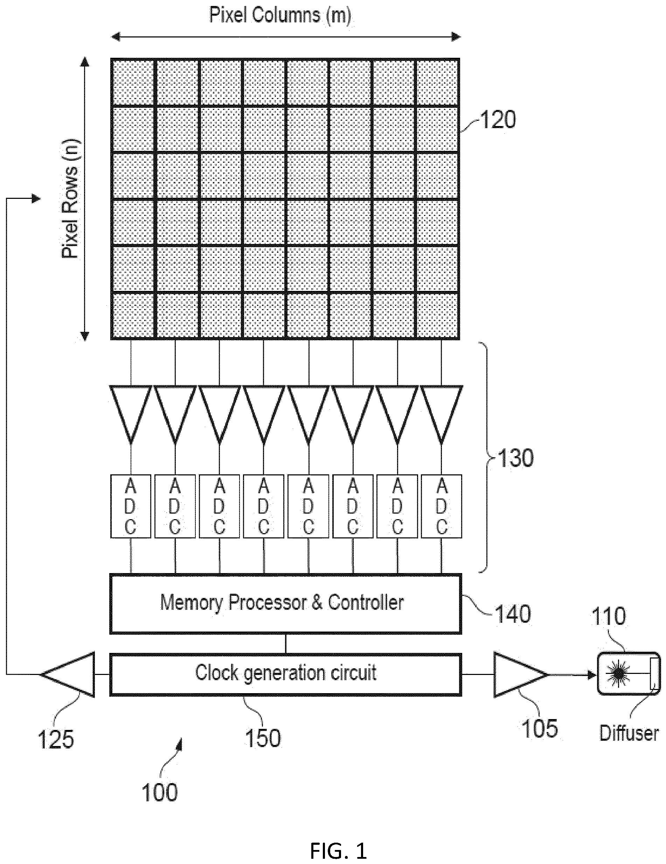

Figure 1 shows an example representation of a CW-ToF camera system 100. The system 100 comprises a laser 110 (which may be any suitable type of laser, for example a VCSEL) and a laser driver 105 configured to drive the laser 110 into light emission.

The system 100 also comprises an imaging sensor 120 that comprises a plurality (in this case m x n) of imaging pixels. A converter system 130 (comprising a plurality of amplifiers and ADCs) is coupled to the imaging sensor 120 for reading off image sensor values (for example, voltages) that are indicative of charge accumulated on the imaging pixels, and digitally converting the read off values, which are output to the memory processor & controller 140. The memory processor & controller 140 may be configured to determine depth frames (also referred to as depth maps), indicative of distance to the object being imaged, based on the received digital values indicative of charge accumulated on the imaging pixels. The memory processor & controller 140 may also be configured to determine active brightness frames (also referred to as 2D IR frames/images). Alternatively, the memory processor & controller 140 may be coupled to a processor via a data base (not shown in the figure) and output the acquired digital values for use by the processor in determining depth frames and/or 2D IR frames. The memory processor & controller 140 controls a clock generation circuit 150, which outputs timing signals for driving the laser 110 and for reading charge off the imaging sensor 120. The converter system 130, memory processor & controller 140 and clock generation circuit 150 may together be referred to as an image acquisition system, configured to determine one or more depth frames by controlling the laser 110 emission, controlling the image sensor 120 charge accumulation timing (via a buffer/amplifier 125), reading off the image sensor 120 and processing the resultant data.

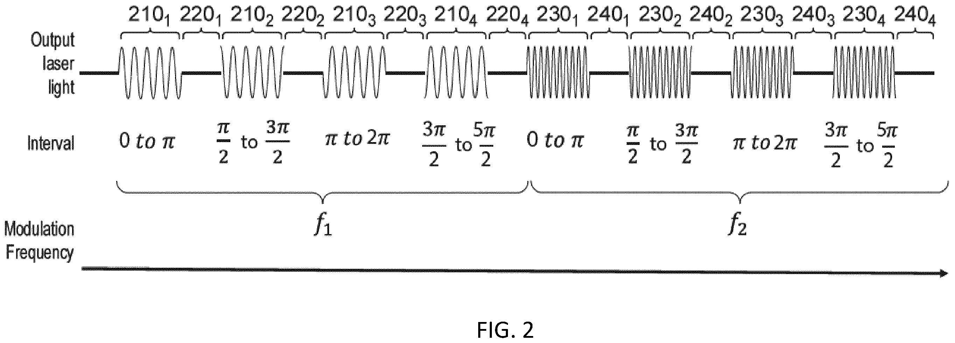

Figure 2 shows an example schematic diagram to help explain the operation of the system 100. The memory processor & controller 140 and clock generation circuit 150 control the laser 110 to output first laser light modulated by a first modulation signal having a first frequency $f_1$ for an accumulation period of time $210_1$. During this period of time, some of the first laser light reflected from the object will be incident on the imaging sensor 120. During the accumulation period of time $210_1$, the memory processor & controller 140 and clock generation circuit 150 also controls the imaging sensor 120 to accumulate charge based on the incident reflected first laser light for the first part/interval of the period/cycle of the first laser light (0° to 180°, or 0 to $\pi$). For example, the imaging sensor 120 is controlled to "open its shutter" for charge accumulation at the times when the phase of the emitted first laser light is between 0° to 180°. This is so that the phase of the received first laser light relative to the emitted first laser light at a first interval of 0 to $\pi$ may later be determined using the charge accumulated on the imaging sensor 120, for example by cross correlating the accumulated charge signal with the first modulation signal. In this example, accumulation takes place for half of the period/cycle of the first laser light, but may alternatively take place for any other suitable amount of time, for example for one quarter of the phase of the first laser light. The skilled person will readily understand how to control the accumulation timing of the imaging sensor 120 using control signals based on the timing of the laser modulation signal. As will be understood by the skilled person, if the image sensor 120 is a single ended pixel type, the pixels may be controlled to accumulate charge for this part/interval of the period and not accumulate any charge for the remainder of the period. If the image sensor 120 is a differential pixel type, the pixels may be controlled to accumulate charge for this part/interval of the period on one side of the pixel and accumulate charge on the other side of the pixel for the remainder of the period. This also applies to the other accumulation parts/intervals described later.

During a subsequent read out period of time $220_1$, the memory processor & controller 140 and clock generation circuit 150 control the first laser $110_1$ to cease emitting light and control readout image sensor values that are indicative of the charge accumulated in the imaging pixels of the imaging sensor 120. The nature of the readout values will depend on the technology of the imaging sensor 120. For example, if the imaging sensor is a CMOS sensor, voltage values may be readout, where each voltage value is dependent on the charge accumulated in an imaging pixel of the imaging sensor 120, such that the readout values are each indicative of charge accumulated in imaging pixels of the imaging sensor 120. In other sensor technologies, the nature of the readout values may be different, for example charge may be directly readout, or current, etc. For example, the imaging sensor 120 may be controlled to readout image sensor values from row-by-row using any standard readout process and circuitry well understood by the skilled person. In this way, a sample of charge accumulated by each imaging pixel during the period $210_1$ may be read off the imaging sensor 120, converted to a digital value and then stored by the memory processor & controller 140. The group of values, or data points, arrived at the conclusion of this process is referred to in this disclosure as a charge sample.

It will be appreciated that the accumulation period of time $210_1$ may last for multiple periods/cycles of the first modulation signal (as can be seen in Figure 1) in order to accumulate sufficient reflected light to perform an accurate determination of the phase of the received reflected light relative to the first modulation signal, for the interval 0 to $\pi$ of the first modulation signal.

During accumulation period of time $210_2$, the memory processor & controller 140 and clock generation circuit 150 again control the first laser $110_1$ to output first laser light modulated by the first modulation signal for an accumulation period of time $210_2$. This is very similar to the accumulation period $210_1$, except during accumulation period of time $210_2$ the memory processor & controller 140 and clock generation circuit 150 controls the imaging sensor 120 to accumulate charge for the second part/interval of the period/cycle of the first modulation signal is delayed with respect to the previous integration (for example, 90° to 270°, or $\pi/2$ to $3\pi/2$). The readout period $220_2$ is very similar to period $220_1$, except the obtained charge sample relates to a shifted or delayed interval of $\pi/2$ to $3\pi/2$ of the first modulation signal.

Accumulation period of time $210_3$ is very similar to the period $210_2$, except the memory processor & controller 140 and clock generation circuit 150 controls the imaging sensor 120 to accumulate charge for the third part/interval of the period/cycle of the first modulation signal (180° to 360°, or $\pi$ to $2\pi$). The readout period $220_3$ is very similar to period $220_2$, except the sampled charge data relates to a shifted or delayed interval of $\pi$ to $2\pi$ of the first modulation signal.

Finally, accumulation period of time $210_4$ is very similar to the period $210_3$, except the memory processor & controller 140 and clock generation circuit 150 also controls the imaging sensor 120 to accumulate charge based on the incident reflected first laser light for a fourth part/interval of the period/cycle of the first modulation signal (270° to 90°, or $3\pi/2$ to $\pi/2$). The readout period $220_4$ is very similar to period $220_3$, except the charge sample relates to a shifted or delayed interval of $3\pi/2$ to $\pi/2$ (or, put another, a shifted or delayed interval of $3\pi/2$ to $5\pi/2$).

It can be seen from the above that for each accumulation period $210_1$-$210_4$, the start timing of pixel accumulation timing relative to the laser modulation signal is shifted (i.e., the relative phase of the laser modulation signal and the pixel demodulation signal, which controls pixel accumulation timing, is shifted). This may be achieved either by adjusting the pixel demodulation signal or by adjusting the laser modulation signal. For example, the timing of the two signals may be set by a clock and for each of the accumulation periods $210_1$-$210_4$, either the laser modulation signal or the pixel demodulation signal may be incrementally delayed by $\pi/2$.

Whilst in this example each accumulation period $210_1$-$210_4$ lasts for 50% of the period of the laser modulation signal (i.e., for 180°), in an alternative, each accumulation period may be shorter, for example 60°, or 90°, or 120°, etc, with the start of each accumulation period relatively offset by 90° as explained above.

After completing this, four samples of data (charge samples) have been acquired and stored in memory. They together may be referred to as a first set of charge samples. Immediately after the read out period $220_4$, or at some later time, a phase relationship between the first laser light and the received reflected light may be determined using the four charge samples (for example by performing a discrete Fourier transform (DFT) on the samples to find the real and imaginary parts of the fundamental frequency, and then determining the phase from the real and imaginary parts, as will be well understood by the skilled person). This may be performed by the image acquisition system, or the charge samples may be output from the distance determination system to an external processor via a data bus for the determination of the phase relationship. Optionally, active brightness (2D IR) may also be determined (either by the distance determination system or the external processor) for the reflected first laser light using the four samples (for example, by determining the magnitude of the fundamental frequency from the real and imaginary parts, as will be well understood by the skilled person).

Whilst in this example four samples of data are obtained by having four accumulation periods $210_1$-$210_4$, for some types of imaging pixel the same number of samples may be obtained from fewer accumulation periods. For example, if the imaging pixels are differential pixels, or two tap pixels, one half of each pixel may be readout for the sample relating to accumulation interval 0° to 180°, and the other half may be readout for accumulation interval 180° to 360°. Therefore, two samples may be obtained from a single accumulation period $210_1$ and readout $220_1$. Likewise, two

samples for 90° to 270° and 270° to 450° may be obtained from a single accumulation period $210_2$ and readout $220_2$. In a further example, if four tap imaging pixels are used with the start of accumulation on each relatively offset by 90°, all four samples may be obtained from a single accumulation period and readout. However, even when two or more samples may be obtained for two or more different phase off-sets in a single accumulation period and readout, optionally multiple accumulation periods and readouts may still be performed, with each phase offset being moved around the available accumulation region of each imaging pixel for each successive accumulation periods, in order to correct for pixel imperfections. For example, for a four tap imaging pixel, there may be four accumulation periods and readouts with the phase offsets being successively moved around the four accumulation regions of each pixel, resulting in four samples for each phase offset, each sample being readout from a different accumulation region of the pixel, meaning that pixel imperfections can be corrected using the samples.

The skilled person will readily understand that using DFT to determine the phase relationship between the first emitted laser light and the received reflected laser light, and to determine active brightness, is merely one example and that any other suitable alternative technique may be used. By way of brief explanation a further non-limiting example is now described.

The transmitted, modulated laser signal may be described by the following equation:

$$s(t) = A_s sin(2\pi f t) + B_s$$

Where:

    $s(t)$ = optical power of emitted signal
    $f$ = laser modulation frequency
    $A_s$ = amplitude of the modulated emitted signal
    $B_s$ = offset of the modulated emitted signal

The signal received at the imaging sensor may be described by the following equation:

$$r(t) = \alpha(A_s sin(2\pi f t + \Phi) + B_s) + B_{env}$$

$$\Phi = 2\pi f \Delta$$

$$\Delta = \frac{2d}{c}$$

Where:

    $r(t)$ = optical power of received signal
    $\alpha$ = attenuation factor of the received signal
    $\Phi$ = phase shift
    $B_{env}$ = amplitude of background light
    $\Delta$ = time delay between emitted and received signals (i.e., time of flight)
    $d$ = distance to imaged object
    $c$ = speed of light

Accumulation timing of the imaging pixels may be controlled using a demodulation signal, $g(t - \tau)$, which is effectively a time delayed version of the illumination signal.

$$g(t - \tau) = A_g sin(2\pi f(t - \tau)) + B_g$$

Where:

    $\tau$ = a variable delay, which can be set to achieve the phase delays/offsets between each accumulation period $210_1$-$210_4$ described above

$A_g$ = amplitude of the demodulation signal

$B_g$ = offset of the demodulation signal

The imaging pixels of the imaging sensor effectively multiply the signals r(t) and get - $\tau$). The resulting signal may be integrated by the imaging pixels of the imaging sensor to yield a cross correlation signal $c(\tau)$:

$$c(\tau) = A sin\big(2\pi f(t - \tau)\big) + B$$

By driving the imaging sensor to accumulate at different offsets during different accumulation periods, as described above, it is possible to measure correlation at different time offsets $\tau$ (phase-offsets $\varphi$) 0, $\pi/2$, $\pi$, $3\pi/2$:

$$c(\tau) = A sin\big(2\pi f(t - \tau)\big) + B = A sin(\Phi - \varphi) + B$$

$$c(\tau) = A(sin(\Phi)\cos(-\varphi) + \cos(\Phi)\,sin\,(-\varphi)\,) + B$$

$$c(0) = A1 = A(sin(\Phi)) + B$$

$$c\left(\frac{\pi}{2}\right) = A2 = -A(\cos(\Phi)) + B$$

$$c(\pi) = A3 = -A(sin(\Phi)) + B$$

$$c\left(\frac{3\pi}{2}\right) = A4 = A(\cos(\Phi)) + B$$

From these readings, it can be determined that the phase offset/time of flight can be found by:

$$\Phi = 2\pi f \Delta = \arctan\left(\frac{sin(\Phi)}{\cos(\Phi)}\right) = \text{atan}\,\big(\frac{A1 - A3}{A4 - A2}\big)$$

Therefore, a depth image or map can be determined using the four charge samples acquired from the image sensor.

An active brightness, or 2D IR, image/frame may also be determined by determining

$$\sqrt{(A4 - A2)^2 + (A1 - A3)^2}$$

.

Subsequently, the process described earlier in relation to periods $210_1$-$210_4$ and $220_1$-$220_4$ may then be repeated in accumulation periods $230_1$-$230_4$ and read out periods $240_1$-$240_4$. These are the same as the accumulation periods $210_1$-$210_4$ and read out periods $220_1$-$220_4$, except rather than driving the laser $110_1$ to emit light modulated with the first modulation signal, the laser 110 is driven to emit light modulated with a second modulation signal. The second modulation signal has a second frequency $f_2$, which is higher (or in some examples, different) than the first frequency $f_1$. As a result, four further samples of data (charge samples) are obtained and stored in memory. Based on these charge samples, a phase relationship between the second laser light and the received reflected light (and optionally also the active brightness for the reflected second laser light) may be determined either by the distance determination system or the external processor, for example using DFT or correlation function processes as described above.

Using the determined phase relationship between the first laser light and the received reflected light and the determined phase relationship between the second laser light and the received reflected light, phase unwrapping may be performed and a single depth image/frame determined by the memory processor & controller 140 (as will be understood by the skilled person). In this way, any phase wrapping issues can be resolved so that an accurate depth frame can be determined. This process may be repeated many times in order to generate a time series of depth frames, which may together form a video.

Optionally, a 2D IR frame may also be determined using the determined active brightness for the first laser light and/or the determined active brightness for the second laser light.

The inventors have recognised that the above described process for acquiring a first set of charge samples (which includes accumulation periods $210_1$-$210_4$ and read out periods $220_1$-$220_4$) and acquiring a second set of charge samples (which includes accumulation periods $230_1$-$230_4$ and read out periods $240_1$-$240_4$) takes a relatively large amount of time. For example, each accumulation period may last in the region of about $100\mu s$ and each read out period may last in the region of about 3ms, such that the entire process lasts in the region of 19ms. During this time, the object being imaged may move relative to the camera system 100, such that the finally determined depth frame may have a blurred image of the object and/or have some inaccuracies. Furthermore, they have recognised the above described processes may require fairly significant energy consumption, which may be particularly significant if the system 100 is implemented within a battery operated device, such as a smartphone or tablet.

The present inventors have identified that by using a phase delay between different rows of a plurality of rows of a pixel array but reading out the phase delayed rows simultaneously, more than one piece of information can be deduced from a single read out and thus the CW-ToF camera system can produce depth images with reduced inaccuracies and/or blurring in the generated image information since the total integration time to acquire the full set of frames required to obtain depth with no wrapping may be reduced. The way in which the present disclosure achieves this effect is by sacrificing spatial resolution for speed. In other words, by using multiple phases within a single image frame and accumulating different rows with different phase delays over a single time period, some spatial resolution may be sacrificed for increased speed, and the overall integration time of the rows is reduced for obtaining the same information as would be obtained if accumulation for each of the rows occurs sequentially.

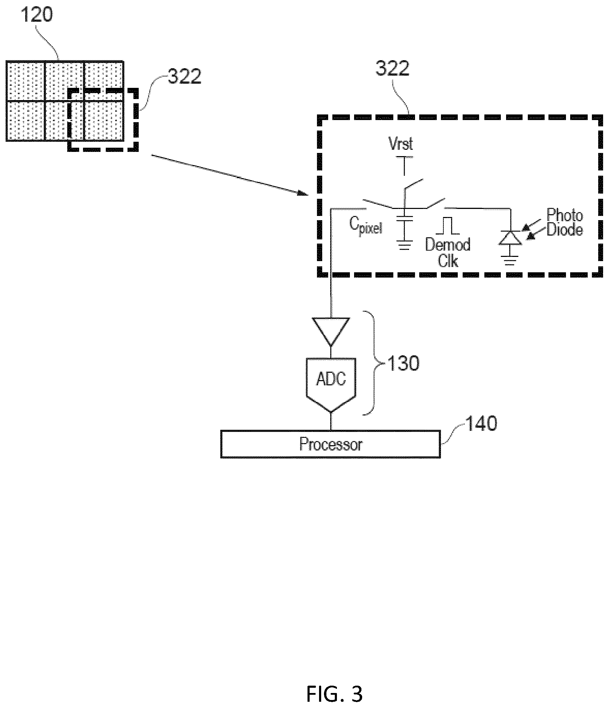

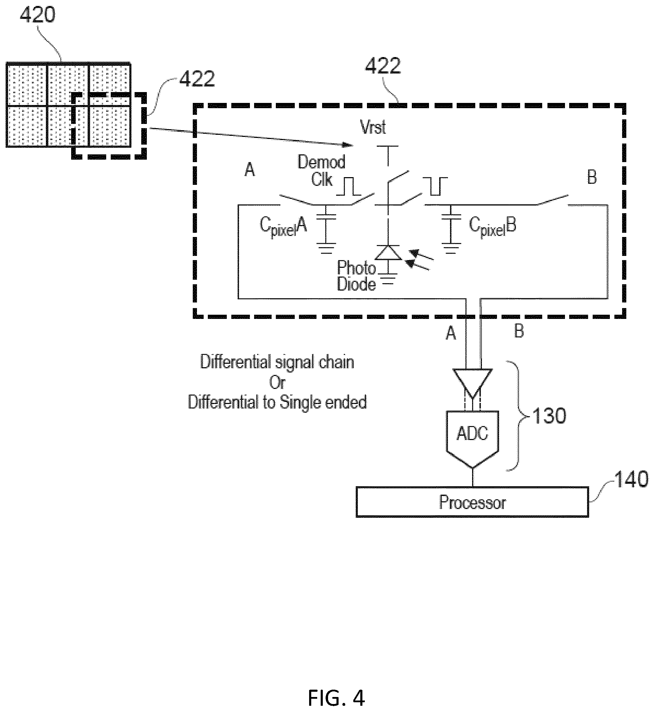

The present invention may work with single-ended and differential pixels. These two types of pixels that examples of the present disclosure use will now be described for context in relation to Figures 3 and 4.

In Figure 1, the image sensor 120 is a single-ended pixel readout design, such that during readout, one single ended signal is read out from each imaging pixel. Figure 3 shows example details of a simplified single ended pixel model for a CMOS image sensor. An example configuration of one imaging pixel 322 is represented in the figure. Rows and columns of the imaging sensor 120 are addressable and typically the camera system 100 may have an amplifier and ADC per column, with pixel charges being readout row by row. Correlated double sampling may be performed to minimise kTC noise.

However, image sensors may alternatively have a differential pixel readout design, such that during readout, a differential signal is readout from each imaging pixel.

Figure 4 shows example details of a simplified differential pixel model for a CMOS image sensor 420. An example configuration of one imaging pixel 422 is represented in the figure. In this example, the amplifiers that are part of the readout circuitry 130 are differential amplifiers. Again, rows and columns of the imaging sensor 120 are addressable and typically the camera system 100 may have an amplifier and ADC per column, with pixel charges being readout row by row. For a CW ToF camera system, side A and side B may be operated in anti-phase, such that when $C_{pixel}A$ is accumulating charge, $C_{pixel}B$ is not, and vice-versa. The differential pixels 422 may accumulate charges on alternate sides A and B. For example $C_{pixel}A$ may accumulate charge during the interval 0 to $\pi$ and $C_{pixel}B$ may accumulate charge during the interval $\pi$ to 0 during the accumulation periods $210_1$ and $230_1$. $C_{pixel}A$ may accumulate charge during the interval $\frac{\pi}{2}$ to $\frac{3\pi}{2}$ and $C_{pixel}B$ may accumulate charge during the interval $\frac{3\pi}{2}$ to $\frac{\pi}{2}$ during the accumulation periods $210_2$ and $230_2$, etc. The accumulated charges may be readout during the readout periods $220_1$-$220_4$ and $240_1$-$240_4$ as differential voltages, amplified by the differential amplifiers and digitally converted by the ADCs before onward processing by the memory, processor and controller 140. Correlated Double Sampling (CDS) measurements may be conducted to minimise kTC noise contribution from the reset voltage Vrst (reference voltage). Samples of the reset voltage and corresponding pixel voltages may be stored on an analog storage device, such as one at the amplifier, and then subtracted from the readout pixel charge signal prior to digital conversion to achieve CDS subtraction in the analog domain, or samples of the reset voltage may be converted individually and subtracted from the readout pixel charge signal in the digital domain.

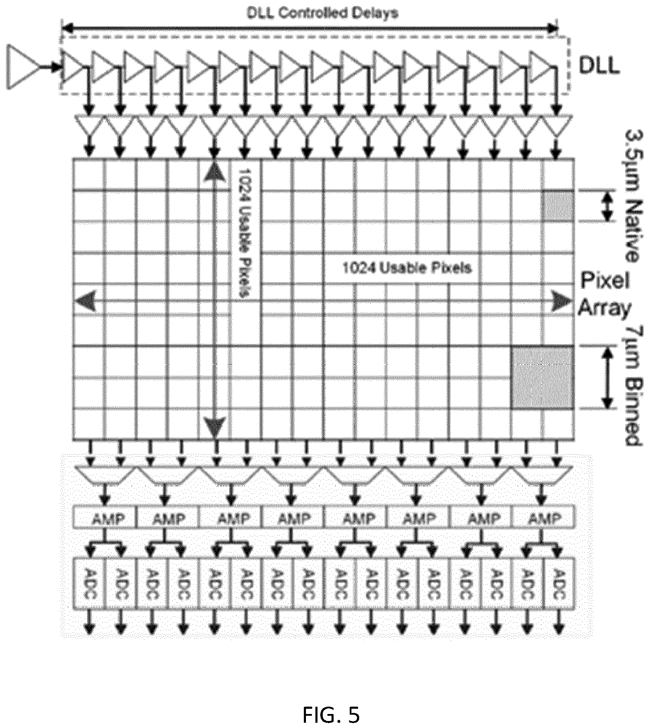

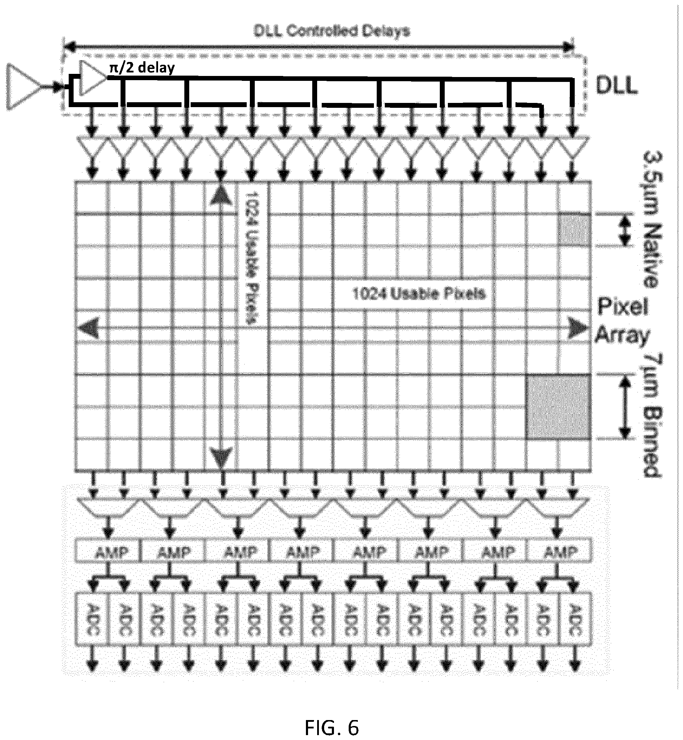

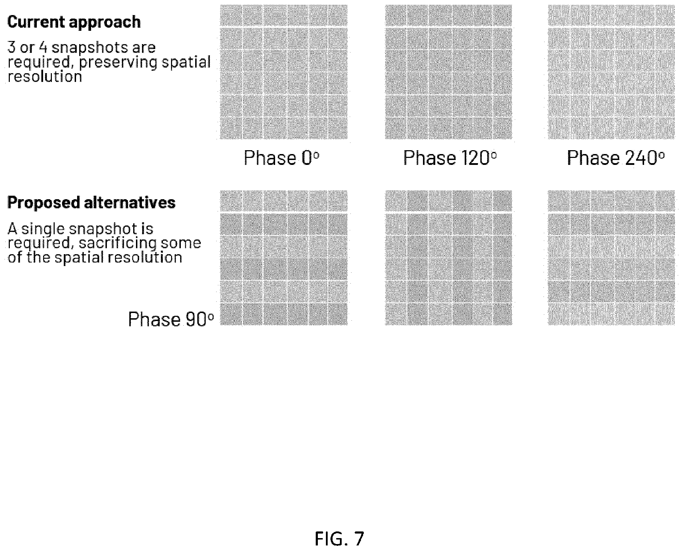

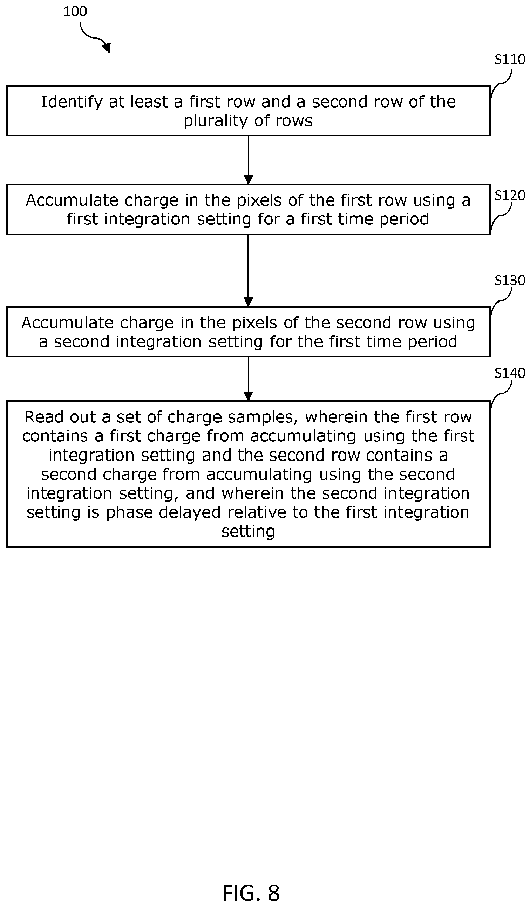

Various specific examples of the architecture of the present disclosure will now be described in detail in relation to Figures 5 and 6. The specific way in which charges may accumulate on a pixel and are read out will be described in detail in relation to Figures 7 and 8.

Figure 5 shows a chip architecture. There may be 1024×1024 useable pixels and may utilise digital delay locked loop distributed clock switching. Buffers are provided to ensure synchronicity between rows.

Figure 6 shows a chip architecture in accordance with an example of the present disclosure. There may be 1024×1024 useable pixels and may utilise digital delay locked loop distributed clock switching. Figure 6 is similar to Figure 5 but a $\pi/2$ phase delay is introduced for every other row in the plurality of rows. A buffer may be provided for each row to ensure synchronicity between rows, for example, the buffers may compensate for delays in the event that the signal is not synchronised. If, say, the modulation signal has a frequency of 200 MHz, and we wish to obtain an accuracy of at least 1%, then the speed of a period/cycle of the laser light is about i.e. 20 GHz (15ns).

It will be appreciated that different phase delays may be used in the present disclosure to that given as an example in Figure 6. For example, 2 or 3 clocks/clock lines that are delayed with respect to each other may be used.

In Figure 7, a comparison between prior techniques and proposed techniques of the present invention is shown.

The top row of Figure 7 shows a current approach, in which the initial starting phases of three snapshots are shown to be 0 degrees, 120 degrees and 240 degrees. In practice, the accumulation for the first snapshot may be from 0-180 degrees, the accumulation for the second snapshot may be from 120-300 degrees, and the accumulation for the third snapshot may be from 240-420 degrees. Each of the first, second and third snapshots are taken when the modulation frequency of the emitted light is at a first modulation frequency. The top row of Figure 7 may be considered similarly to the first three accumulations of Figure 2 (albeit with different initial phases; the initial phases of the example of the top row of Figure 7 are 0 degrees, 120 degrees and 240 degrees, whereas the initial phases of the example of Figure 2 are 0 degrees, 90 degrees and 180 degrees).

Importantly, in the present disclosure of the bottom row of Figure 7, charge in each of the rows is accumulated at the same time, with slight phase delays between some of the rows, the phase delays being dependent upon the modulation frequency of the emitted laser light (the modulation frequency of the emitted laser light is the same for each of the rows during accumulation). The phase delay between adjacent rows is very small relative to the total time of accumulation, which may be hundreds of periods/cycles of emitted laser light.

In the example shown in the bottom right hand corner of Figure 7, the accumulation for the first row may be from 0-180 degrees, the accumulation for the second row may be from 120-300 degrees, and the accumulation for the third row may be from 240-420 degrees. Further, accumulation for the fourth row may be from 0-180 degrees, the accumulation for the fifth row may be from 120-300 degrees, and the accumulation for the sixth row may be from 240-420 degrees. In other words, the phase delay between the initial starting phases of adjacent rows is 120 degrees, or $3\pi/2$. It will be appreciated that these accumulation phases are examples only, and other accumulation phases may equally be applied in the present disclosure, for example, $\pi/3$, $2\pi/3$ and $\pi$.

Considering a pixel from the first row, an adjacent pixel from the second row and another adjacent pixel from the third row as three 'subpixels' of a 'macropixel', each subpixel has a phase delay between them, and said subpixels with phase delays between them are read out simultaneously and combined to obtain a depth value. It will be appreciated that any combination of subpixels that are adjacent one another may be combined in order to obtain the depth value, i.e. not necessarily the first, second and third rows. In the example of the bottom right hand corner of Figure 7, the second, third and fourth rows, or the third, fourth and fifth rows could similarly make up a macropixel. In other words, the macropixels may overlap one another. In an example whereby the rows a, b, c, d and e lie somewhere in the centre of a plurality of rows, row a samples at phase -pi/3 (-120 degrees) row b samples at phase 0, row c at phase pi/3 (120 degrees), row d at phase 2pi/3 (240 degrees), and row e at phase pi (180 degrees). The three rows may be combined to estimate one depth for the micropixel centred on row b. Rows a, b and c as well as rows c, d and e may also be combined to estimate one depth. As a result, a better estimation of the depth of the pixels in row c is obtained than if the macropixels were not overlapped.

In these examples with three different initial start phases, typically 25% of the spatial resolution is sacrificed compared with a native spatial resolution, i.e. an arrangement whereby accumulation occurs as per Figure 2. However, speed is gained where spatial resolution is sacrificed. In the example where there are three subpixels, a speed gain of three times may be achieved for sacrificing 25% of the spatial resolution.

In the example shown in the bottom left hand corner of Figure 7, the accumulation for the first, third and fifth rows may be from 0-180 degrees, and the accumulation for the second, fourth and sixth rows may be from 90-240 degrees. In other words, the phase delay between the initial starting phases of adjacent rows is 90 degrees, or $\pi/2$. It will be appreciated that these accumulation phases are examples only, and other accumulation phases may equally be applied in the present disclosure, for example, $3\pi/2$.

Considering a pixel from the first row and an adjacent pixel from the second row as two 'subpixels' of a 'macropixel', each subpixel has a phase delay between them, and said subpixels with phase delays between them are read out simultaneously and combined to obtain a depth value. It will be appreciated that any combination of subpixels that are adjacent one another may be combined in order to obtain the depth value, i.e. not necessarily the first, second and third rows. In the example of the bottom left hand corner of Figure 7, the second and third rows, or the third and fourth rows, or the fourth and fifth rows, or the fifth and sixth rows could similarly make up a macropixel. In other words, the macropixels may overlap one another. In an example whereby the rows a, b, and c lie somewhere in the centre of a plurality of rows, row a samples at -pi/2 (-90 degrees), row b samples at phase 0 and row c at phase pi/2 (90 degrees). Rows b and c may be combined to estimate one depth. Rows a and b may also be combined to estimate one depth. As a result, a better estimation of the depth of the pixels in row c is obtained than if the macropixels were not overlapped.

For example, a speed gain of two times may be achieved for sacrificing 33% of the spatial resolution.

There are advantages associated with each the examples of the present disclosure having three subpixels and two subpixels. The three subpixels example may be particularly advantageous for imaging flat surfaces whereas the two subpixels example may be particularly advantageous for achieving a good balance between spatial resolution and speed (sacrifices less spatial resolution than the three subpixel example but is slower).

At the centre of the bottom row of Figure 7, an example using two subpixels is shown. Although the rows are shown vertically in the image, it will be appreciated that the term 'row' has no implication on the physical orientation of the pixels, i.e. it has no implication on whether the line is oriented horizontally or vertically.

In relation to the prior art of Figure 2, it was described that a phase relationship between the first laser light and the received reflected light may be determined using the four charge samples (for example by performing a discrete Fourier transform (DFT) on the samples to find the real and imaginary parts of the fundamental frequency, and then determining the phase from the real and imaginary parts, as will be well understood by the skilled person). In the example of the bottom right hand corner of Figure 7, with three different initial start phases, a phase relationship between the first laser light and the received reflected light may be determined using at least the three charge samples (for example, using DFT techniques). In the example of the bottom left hand corner of Figure 7, with two different initial start phases, a phase relationship between the first laser light and the received reflected light may be determined using at least the three charge samples (for example, using DFT or correlation or other techniques). The skilled person will readily understand that various techniques may be used to determine the phase relationship between the first emitted laser light and the received reflected laser light.

Figure 8 represents example method steps 100 according to an aspect of the present disclosure. In general, at step S110, at least a first row and a second row of the plurality of rows are identified. The first row and the second row are adjacent one another in the pixel array. At step S120, charge in the pixels of the first row are accumulated using a first integrations setting for a first time period. At step S130, charge in the pixels of the second row are accumulated using a second integration setting for the first time period. Finally, at step S140, a set of charge samples are read out, wherein the first row contains a first charge from accumulating using the first integration setting and the second row contains a second charge from accumulating using the second integration setting, and wherein the second integration setting is phase delayed relative to the first integration setting.

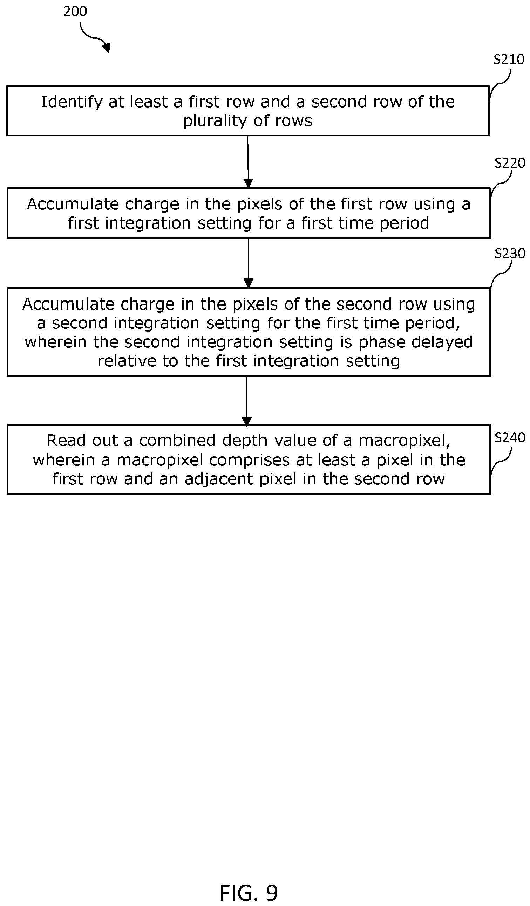

Figure 9 represents example method steps 200 according to an aspect of the present disclosure. In general, at step S210, at least a first row and a second row of the plurality of rows are identified. The first row and the second row are adjacent one another in the pixel array. At step S220, charge in the pixels of the first row are accumulated using a first integrations setting for a first time period. At step S230, charge in the pixels of the second row are accumulated using a second integration setting for the first time period, wherein the second integration setting is phase delayed relative to the first integration setting. Finally, at step S240, a combined depth value of a macropixel is read out, wherein a macropixel comprises at least a pixel in the first row and an adjacent pixel in the second row.

The skilled person will readily appreciate that various alterations or modifications may be made to the above described aspects of the disclosure without departing from the scope of the disclosure. For example, features of two or more of the above examples may be combined and still fall within the scope of the present disclosure.

The image sensors described above may be a single-ended pixel or differential pixel define (for example, a CMOS single ended or differential sensor design). Therefore, it will be appreciated that each pixel readout may either be single ended or differential.

Numbered aspects

By way of non-limiting example, some aspects of the disclosure are set out in the following numbered clauses.

Numbered Clause 1. A continuous wave time of flight, CW-ToF, camera system comprising:

a laser for emitting laser light;
an imaging sensor, the image sensor comprising a pixel array for accumulating charge based on incident light comprising reflected laser light off an object, the pixel array comprising a plurality of rows of pixels; and
a control system coupled to the imaging sensor and configured to control the pixel array to:

identify at least a first row and a second row of the plurality of rows, wherein the first row and the second row are adjacent one another in the pixel array;
accumulate charge in the pixels of the first row using a first integration setting for a first time period;
accumulate charge in the pixels of the second row using a second integration setting for the first time period; and
read out a set of charge samples, wherein the first row contains a first charge from accumulating using the first integration setting and the second row contains a second charge from accumulating using the second integration setting, and wherein the second integration setting is phase delayed relative to the first integration setting.

Numbered Clause 2. The CW-ToF camera system of Numbered Clause 1, wherein the first integration setting is a first phase of the emitted laser light over which accumulation occurs.

Numbered Clause 3. The CW-ToF camera system of Numbered Clause 1 or 2, wherein the second integration setting is a second phase of the emitted laser light over which accumulation occurs.

Numbered Clause 4. The CW-ToF camera system of any preceding Numbered Clause, wherein the phase delay between the first integration setting and the second integration setting is achieved by adjusting the pixel demodulation signal or by adjusting the laser modulation signal, preferably using buffers to ensure synchronicity between rows.

Numbered Clause 5. The CW-ToF camera system of any preceding Numbered Clause, wherein the phase delay between the first integration setting and the second integration setting is of an order of magnitude smaller relative to the first time period, preferably two orders of magnitude smaller relative to the first time period.

Numbered Clause 6. The CW-ToF camera system of any preceding Numbered Clause, wherein the phase delay between the first integration setting and the second integration setting is $\pi/2$.

Numbered Clause 7. The CW-ToF camera system of any preceding Numbered Clause, wherein the phase delay between the first integration setting and the second integration setting is $3\pi/2$.

Numbered Clause 8. The CW-ToF camera system of any preceding Numbered Clause, wherein the control system is configured to control the pixel array to combine the first charge and the second charge in order to determine a combined depth value.

Numbered Clause 9. The CW-ToF camera system of Numbered Clause 8, wherein a macropixel comprises at least a pixel in the first row and an adjacent pixel in the second row, and wherein the control system is configured to read out combined depth values from a plurality of macropixels, the macropixels being shifted by one row at a time.

Numbered Clause 10. The CW-ToF camera system of any preceding Numbered Clause, wherein the control system is configured to reset at least a first row and a second row of the plurality of rows prior to accumulating charge in each the first row and the second row, or following reading out the set of charge samples.

Numbered Clause 11. The CW-ToF camera system of any preceding Numbered Clause,

wherein pixels of the first row and pixels of the second row are differential pixels each having two or more areas that accumulate charge during different accumulation periods; and
wherein the two or more areas of each pixel are driven by a common clock.

Numbered Clause 12. The CW-ToF camera system of any preceding Numbered Clause, wherein the two or more of the pixels or two or more areas of the pixels of the first row and the two or more of the pixels or two or more areas of the pixels of the second row are arranged in a checkerboard pattern.

Numbered Clause 13. A method of reading out a pixel array of an imaging sensor of a continuous wave time of flight, CW-ToF, camera system, the pixel array comprising a plurality of rows of pixels, the method comprising:

identifying at least a first row and a second row of the plurality of rows, wherein the first row and the second row are adjacent one another in the pixel array;
accumulating charge in the pixels of the first row using a first integration setting for a first time period;
accumulating charge in the pixels of the second row using a second integration setting for the first time period; and
reading out a set of charge samples, wherein the first row contains a first charge from accumulating using the first integration setting and the second row contains a second charge from accumulating using the second integration setting, and wherein the second integration setting is phase delayed relative to the first integration setting.

Numbered Clause 14. The method of Numbered Clause 13, wherein the first integration setting is a first phase of the emitted laser light over which accumulation occurs.

Numbered Clause 15. The method of Numbered Clause 13 or 14, wherein the second integration setting is a second phase of the emitted laser light over which accumulation occurs.

Numbered Clause 16. The method of any of Numbered Clauses 13 to 15, wherein the phase delay between the first integration setting and the second integration setting is achieved by adjusting the pixel demodulation signal or by adjusting the laser modulation signal, preferably using buffers to ensure synchronicity between rows.

Numbered Clause 17. The method of any of Numbered Clauses 13 to 16, wherein the phase delay between the first integration setting and the second integration setting is of an order of magnitude smaller relative to the first time period, preferably two orders of magnitude smaller relative to the first time period.

Numbered Clause 18. The method of any of Numbered Clauses 13 to 17, wherein the phase delay between the first integration setting and the second integration setting is $\pi/2$.

Numbered Clause 19. The method of any of Numbered Clause 13 to 18, wherein the phase delay between the first integration setting and the second integration setting is $3\pi/2$.

Numbered Clause 20. The method of any of Numbered Clauses 13 to 19, further comprising combining the first charge and the second charge in order to determine a combined depth value.

Numbered Clause 21. The method of Numbered Clause 20, wherein a macropixel comprises at least a pixel in the first row and an adjacent pixel in the second row, and the method further comprising reading out combined depth values from a plurality of macropixels, the macropixels being shifted by one row at a time.

Numbered Clause 22. The method of any of Numbered Clauses 13 to 21, further comprising resetting at least a first row and a second row of the plurality of rows prior to accumulating charge in each the first row and the second row, or following reading out the set of charge samples.

Numbered Clause 23. The method of any of Numbered Clauses 13 to 22, further comprising changing the integration setting of the first row and/or the second row.

Numbered Clause 24. A method of reading out pixel array of an imaging sensor of a continuous wave time of flight, CW-ToF, camera system, the pixel array comprising a plurality of rows of pixels, the method comprising:

identifying at least a first row and a second row of the plurality of rows, wherein the first row and the second row are adjacent one another in the pixel array;
accumulating charge in the pixels of the first row using a first integration setting for a first time period;
accumulating charge in the pixels of the second row using a second integration setting for the first time period, wherein the second integration setting is phase delayed relative to the first integration setting; and
reading out a combined depth value of a macropixel, wherein a macropixel comprises at least a pixel in the first row and an adjacent pixel in the second row.

**Claims**

1. A continuous wave time of flight, CW-ToF, camera system comprising:

a laser for emitting laser light;
an imaging sensor, the image sensor comprising a pixel array for accumulating charge based on incident light comprising reflected laser light off an object, the pixel array comprising a plurality of rows of pixels; and
a control system coupled to the imaging sensor and configured to control the pixel array to:

identify at least a first row and a second row of the plurality of rows, wherein the first row and the second row are adjacent one another in the pixel array;
accumulate charge in the pixels of the first row using a first integration setting for a first time period;
accumulate charge in the pixels of the second row using a second integration setting for the first time period; and
read out a set of charge samples, wherein the first row contains a first charge from accumulating using the first integration setting and the second row contains a second charge from accumulating using the second integration setting, and wherein the second integration setting is phase delayed relative to the first integration setting.

2. The CW-ToF camera system of claim 1, wherein the first integration setting is a first phase of the emitted laser light over which accumulation occurs and/or wherein the second integration setting is a second phase of the emitted laser light over which accumulation occurs.

3. The CW-ToF camera system of any preceding claim, wherein the phase delay between the first integration setting and the second integration setting is achieved by adjusting the pixel demodulation signal or by adjusting the laser modulation signal, preferably using buffers to ensure synchronicity between rows.

4. The CW-ToF camera system of any preceding claim, wherein the phase delay between the first integration setting and the second integration setting is of an order of magnitude smaller relative to the first time period, preferably two orders of magnitude smaller relative to the first time period.

5. The CW-ToF camera system of any preceding claim, wherein the phase delay between the first integration setting and the second integration setting is $\pi/2$ or wherein the phase delay between the first integration setting and the second integration setting is $3\pi/2$.

6. The CW-ToF camera system of any preceding claim, wherein the control system is configured to control the pixel array to combine the first charge and the second charge in order to determine a combined depth value.

7. The CW-ToF camera system of claim 6, wherein a macropixel comprises at least a pixel in the first row and an adjacent pixel in the second row, and wherein the control system is configured to read out combined depth values from a plurality of macropixels, the macropixels being shifted by one row at a time.

8. A method of reading out a pixel array of an imaging sensor of a continuous wave time of flight, CW-ToF, camera system, the pixel array comprising a plurality of rows of pixels, the method comprising:

   identifying at least a first row and a second row of the plurality of rows, wherein the first row and the second row are adjacent one another in the pixel array;
   accumulating charge in the pixels of the first row using a first integration setting for a first time period;
   accumulating charge in the pixels of the second row using a second integration setting for the first time period; and
   reading out a set of charge samples, wherein the first row contains a first charge from accumulating using the first integration setting and the second row contains a second charge from accumulating using the second integration setting, and wherein the second integration setting is phase delayed relative to the first integration setting.

9. The method of claim 8, wherein the first integration setting is a first phase of the emitted laser light over which accumulation occurs and/or wherein the second integration setting is a second phase of the emitted laser light over which accumulation occurs.

10. The method of claim 8 or 9, wherein the phase delay between the first integration setting and the second integration setting is achieved by adjusting the pixel demodulation signal or by adjusting the laser modulation signal, preferably using buffers to ensure synchronicity between rows.

11. The method of any of claims 8 to 10, wherein the phase delay between the first integration setting and the second integration setting is of an order of magnitude smaller relative to the first time period, preferably two orders of magnitude smaller relative to the first time period.

12. The method of any of claims 8 to 11, wherein the phase delay between the first integration setting and the second integration setting is $\pi/2$ or wherein the phase delay between the first integration setting and the second integration setting is $3\pi/2$.

13. The method of any of claims 8 to 12, further comprising combining the first charge and the second charge in order to determine a combined depth value.

14. The method of claim 13, wherein a macropixel comprises at least a pixel in the first row and an adjacent pixel in the second row, and the method further comprising reading out combined depth values from a plurality of macropixels, the macropixels being shifted by one row at a time.

15. The method of any of claims 8 to 14, further comprising changing the integration setting of the first row and/or the second row.

Pixel Columns (m)

Pixel Rows (n)

120

130

| A D C | A D C | A D C | A D C | A D C | A D C | A D C | A D C |

Memory Processor & Controller 140

Clock generation circuit

125 150 100 105

110

Diffuser

FIG. 1

FIG. 2

120

322

322

Vrst

$C_{pixel}$

Demod
Clk

Photo
Diode

ADC

130

Processor

140

FIG. 3

420

422

422

Vrst

A

Demod
Clk

B

$C_{pixel}A$

$C_{pixel}B$

Photo
Diode

A

B

Differential signal chain
Or
Differential to Single ended

130

ADC

140

Processor

FIG. 4

FIG. 5

FIG. 6

**Current approach**

3 or 4 snapshots are
required, preserving spatial
resolution

Phase 0°              Phase 120°              Phase 240°

**Proposed alternatives**

A single snapshot is
required, sacrificing some
of the spatial resolution

Phase 90°

FIG. 7

100

S110

Identify at least a first row and a second row of the plurality of rows

S120

Accumulate charge in the pixels of the first row using a first integration setting for a first time period

S130

Accumulate charge in the pixels of the second row using a second integration setting for the first time period

S140

Read out a set of charge samples, wherein the first row contains a first charge from accumulating using the first integration setting and the second row contains a second charge from accumulating using the second integration setting, and wherein the second integration setting is phase delayed relative to the first integration setting

FIG. 8

200

S210

Identify at least a first row and a second row of the plurality of rows

S220

Accumulate charge in the pixels of the first row using a first integration setting for a first time period

S230

Accumulate charge in the pixels of the second row using a second integration setting for the first time period, wherein the second integration setting is phase delayed relative to the first integration setting

S240

Read out a combined depth value of a macropixel, wherein a macropixel comprises at least a pixel in the first row and an adjacent pixel in the second row

FIG. 9

Europäisches
Patentamt

European
Patent Office

Office européen
des brevets

# EUROPEAN SEARCH REPORT

Application Number

EP 24 15 8870

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 647 813 A1 (INFINEON TECHNOLOGIES AG [DE]) 6 May 2020 (2020-05-06) * paragraphs [0026], [0027], [0034], [0039], [0042]; figures 1, 6 * | 1-15 | INV. G01S17/36 G01S7/4914 G01S7/493 G01S17/894 |
| A | US 2021/356597 A1 (HURWITZ JONATHAN EPHRAIM DAVID [GB] ET AL) 18 November 2021 (2021-11-18) * paragraph [0102]; figure 8 * | 7,14 | |
| A | US 2021/223371 A1 (MEYNANTS GUY [CH]) 22 July 2021 (2021-07-22) * paragraphs [0002], [0008], [0016], [0083], [0085]; figure 2b * | 1,8 | |
| A | US 2021/392282 A1 (BELOKONSKIY VICTOR [BE]) 16 December 2021 (2021-12-16) * paragraphs [0062], [0064], [0065]; figures 4B, 5 * | 1,8 | |

TECHNICAL FIELDS
SEARCHED      (IPC)

G01S

The present search report has been drawn up for all claims

| Place of search | Date of completion of the search | Examiner |
|---|---|---|
| Munich | 18 July 2024 | Kirscher, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 8870

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2024

| Patent document cited in search report | | Publication date | Patent family member(s) | | Publication date |
|---|---|---|---|---|---|
| EP 3647813 | A1 | 06-05-2020 | CN | 111200710 A | 26-05-2020 |
| | | | EP | 3647813 A1 | 06-05-2020 |
| | | | US | 2020132819 A1 | 30-04-2020 |
| US 2021356597 | A1 | 18-11-2021 | CN | 113687376 A | 23-11-2021 |
| | | | EP | 3910375 A1 | 17-11-2021 |
| | | | US | 2021356597 A1 | 18-11-2021 |
| US 2021223371 | A1 | 22-07-2021 | CN | 111602070 A | 28-08-2020 |
| | | | EP | 3474038 A1 | 24-04-2019 |
| | | | EP | 4400867 A2 | 17-07-2024 |
| | | | US | 2021223371 A1 | 22-07-2021 |
| | | | WO | 2019081301 A1 | 02-05-2019 |
| US 2021392282 | A1 | 16-12-2021 | CN | 112789514 A | 11-05-2021 |
| | | | EP | 3844528 A1 | 07-07-2021 |
| | | | KR | 20210083250 A | 06-07-2021 |
| | | | US | 2021392282 A1 | 16-12-2021 |
| | | | WO | 2020089062 A1 | 07-05-2020 |

EPO FORM P0459

For more details about this annex : see Official Journal of the European Patent Office, No. 12/82